# EUROPÄISCHE PATENTSCHRIFT

(11) **EP 0 856 927 B1**
(45) Veröffentlichungstag und Bekanntmachung des Hinweises auf die Patenterteilung: **15.12.1999**
(21) Anmeldenummer: 98100980.6
(22) Anmeldetag: 21.01.1998
(51) Int. Cl.: H02G 3/12, H02B 1/044

(54) **Vorrichtung zur Befestigung eines Überspannungsschutzgerätes in einer elektrischen Dose**
Retention devire of a surge protection apparatus in an electrical box
Dispositif de fixation dans un boîtier électrique d'un appareil de protection conter les surtensions

(30) Priorität: 28.01.1997 DE 19702939
(43) Veröffentlichungstag der Anmeldung: 05.08.1998
(73) Patentinhaber: Pollmann Elektrotechnik GmbH, 59302 Oelde (DE)
(72) Erfinder: Franz, Wilhelm, 59227 Ahlen (DE)
(74) Vertreter: Hassler, Werner, Dr.

(56) Entgegenhaltungen:
- FR-A- 2 275 113
- US-A- 4 053 082

## Beschreibung

Die Erfindung betrifft eine Vorrichtung zur Befestigung eines Überspannungsschutzgerätes in einer elektrischen Dose, wie Verteilerdose oder Geräteeinbaudose, mit einer dessen elektrische Bauelemente aufnehmenden Platine sowie einem diese tragenden Ring.

Anwendungsgebiet der Erfindung ist der Überspannungsschutz von elektrischen Geräten gegen Überspannuungen auf den elektrischen Versorgungsleitungen. Die Vorrichtung ist für Verteilerdosen und Geräteeinbaudosen für Unterpuzmontage oder Aufputzmontage vorgesehen.

Die DE 44 20 080 A1 beschreibt eine Vorrichtung der gattungsgemäßen Art. Die Platine ist im Sockelbereich einer Dose untergebracht und durch Schrauben an einem Tragring befestigt. Dieses erfordert jedoch eine spezifische Anpassung des Einbaugerätes. Ein nachträglicher Einbau ist nicht oder nur mit großem Aufwand möglich.

Die DE OS 2 241 837 beschreibt eine Spreizfeder zur Befestigung eines Installationsgerätes in einer Dose. An der Spreizfeder ist das Installationsgerät bzw. dessen Sockel festgeschraubt. Für den Einbau weiterer Bauteile ist die Spreizfeder nicht geeignet.

Aufgabe der Erfindung ist die Bereitstellung einer Vorrichtung zur Befestigung eines Überspannungsschutzgerätes in einer Dose, wobei die Vorrichtung von der Stirnseite in die Dose einsetzbar ist und einen nachträglichen Einbau ermöglicht.

Diese Aufgabe wird nach der Erfindung dadurch gelöst, daß der Ring in radialer Richtung nachgiebig ist und die Platine aufnimmt sowie im Bereich seines Stirnrandes in radialer Richtung nach außen vorgespannte Federelemente aufweist.

Die Erfindung unterscheidet sich insofern vom Stand der Technik, als die Vorrichtung mit dem Überspannungsschutzgerät im Randbereich des Innenraums der Dose untergebracht ist und sich mit dem Ring an der Umfangswand der Dose festhält. Dadurch wird der Innenraum der Dose nicht nennenswert eingeschränkt, so daß der Einbau von Installationsgeräten, Anschlußgeräten oder dergleichen unbehindert möglich ist.

Eine besonders sichere Halterung durch die Federwirkung wird dadurch erzielt, daß der Ring offen ist und daß die Schenkel des Rings als Federelemente dienen. Die Schenkel passen sich so der Innenwandung der Dose an.

Eine Festlegung der Vorrichtung in Umfangsrichtung wird dadurch erreicht. daß im Mittelbereich des Rings eine Rinne zur Ausrichtung an einem Auge der Dose vorgesehen ist.

Eine sichere Konstruktion wird dadurch erzielt, daß die Schenkel des Rings bandförmig ausgebildet sind. Dadurch wird eine große Anlagefläche erzielt.

Ein abgewandeltes Ausführungsbeispiel der Vorrichtung zeichnet sich dadurch aus, daß die Vorrichtung einen stirnseitigen Ring mit sehnenförmigen Abschnitten und mit an der Außenfläche angeordneten Federzungen aufweist. Diese Abschnitte können beim Einbau in die Dose unter Wölbung nach innen nachgeben.

Das Einführen der Vorrichtung in die Dose wird dadurch erleichtert, daß die Federzungen in axialer Richtung gegen den Stirnrand hin ausgerichtet sind. Damit zeigen die Federzungen eine widerhakenartige Wirkung.

Die Herstellung und Handhabung der Vorrichtung wird dadurch verbessert, daß die Federelemente in dieselbe integriert oder mit derselben einstückig ausgebildet sind. Die Vorrichtung ist ein Thermoplastspritzformteil. Die Federelemente können einstückig angespritzte Zungen oder Schenkel sein. Man kann auch Federelemente aus Stahlband vorsehen, die in die Vorrichtung eingelegt oder eingespritzt sind.

Ausführungsbeispiele werden anhand der Zeichnungen erläutert, in denen darstellen:
Fig. 1 eine Vorrichtung im Einbauzustand in einer Dose in Draufsicht,
Fig. 2 eine Seitenansicht der Vorrichtung ohne Dose,
Fig. 3 die Vorrichtung in der Draufsicht,
Fig. 4 eine Seitenansicht der Vorrichtung,
Fig. 5 ein weiteres Ausführungsbeispiel im Einbauzustand entsprechend Fig. 1,
Fig. 6 eine Draufsicht auf die Vorrichtung ohne Dose und
Fig. 7 eine Seitenansicht zu Fig. 6.

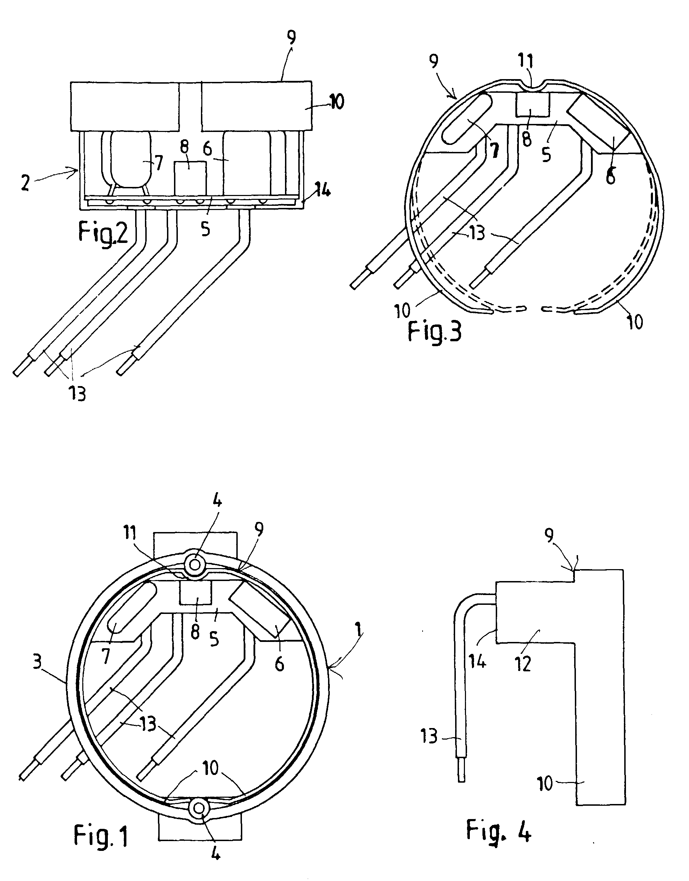

Fig. 1 zeigt eine Unterputzdose 1, im Folgenden Dose genannt, mit einem Abschlußring 3 mit Augen 4 zur Aufnahme von Befestigungsschrauben einer Abdeckung oder eines Tragrings eines Installationsgerätes, was nicht dargestellt ist. Die Durchgänge der Dose für die elektrischen Leitungen sind ebenfalls im Einzelnen nicht erläutert.

Die Vorrichtung 2 umfaßt eine segmentförmige Bodenplatte 14 zur Aufnahme einer segmentförmigen Platine 5, die die Bauelemente 6, 7, 8, insbesondere Varistoren und Gasableiter, einer Überspannungsschutzschaltung trägt, und Stege 12 zur Halterung eines Rings 9. An die Platine 5 sind elektrische Leiter 13 angeschlossen, die mit den Anschlußklemmen eines nicht dargestellten Installationsgerätes verbunden werden.

Der Ring 9 ist offen und weist zwei in Umfangsrichtung ausgerichtete, bandförmige Schenkel 10 auf, zwischen deren Enden ein Schlitz freibleibt. Der Ring 9 hat im Mittelbreich eine Rinne 11, die einem Auge 4 der Dose 1 angepaßt ist. Die Schenkel 10 des Rings 9 sind radial nach außen elastisch im Sinne einer Aufweitung des Rings 9 vorgespannt. Der Ring 9 besteht aus einem elastischen Thermoplast und ist einstückig mit der Vorrichtung 2 als Spritzgußteil ausgebildet. Der Ring 9 nimmt, gegebenenfalls einstückig, die Platine 5 auf. Der Ring 9 kann auch aus Metall bestehen und integriert mit der Vorrichtung 2 ausgebildet sein.

Die beschriebene Vorrichtung mit dem Überspannungsschutzgerät wird in die Öffnung der Dose 1 eingeführt, wobei die Schenkel 10 des Rings 9 radial nach innen gedrückt werden, wie dies in Fig. 3 in gestrichelten Linien angedeutet ist. Die Ausrichtung in Umfangsrichtung erfolgt mittels der Rinne 11 an einem Auge 4 der Dose 1. Nach dem Einführen der Vorrichtung spreizen sich die Schenkel 10 nach außen auf und legen sich an die Wandung der Dose 1 an. So ist die Vorrichtung in der Dose 1 festgelegt und ausgerichtet. Das Einsetzen eines Installationsapparates in die Dose 1 wird durch den dünnen Ring 9 nicht behindert.

Man kann die Vorrichtung mit dem Überspannungsschutzgerät in Unterputzdosenm, Aufputzdosen, Kanaldosen, Apparatedosen, Verteilerdosen und andere Dosen einbauen. Der Einbau ist jederzeit auch nachträglich möglich.

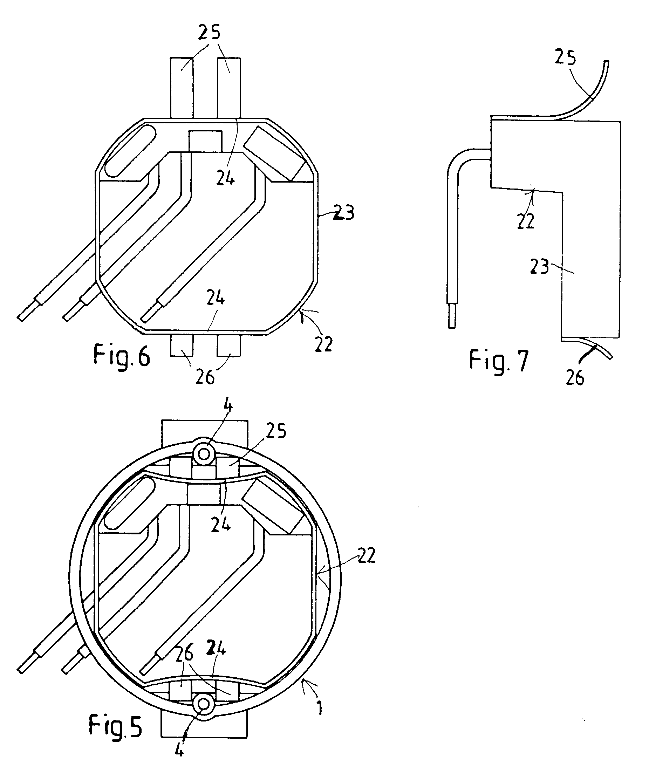

Das weitere Ausführungsbeispiel der Fig. 5 bis 7 zeigt eine Vorrichtung 22 mit einem stirnseitigen Ring 23, der sehnenförmige, im Wesentlichen gerade Abschnitte 24 aufweist. Im Bereich dieser Abschnitte 24 sind an der Außenfläche in axialer Richtung gegen den Stirnrand hin ausgerichtete Federzungen 25, 26 angeformt, die sich als Federelemente raidal nach außen spreizen. Im Einbauzustand nach Fig. 5 verformen sich die Abschnitte 24 durch die Federwirkung und nehmen eine Wölbung nach innen an. Dadurch erzielt man eine Nachgiebigkeit des Rings 23, so daß eine sichere Halterung der Vorrichtung 2 in der Dose 1 sichergestellt ist.

## Patentansprüche

1. Vorrichtung (2, 22) zur Befestigung eines Überspannungsschutzgerätes in einer elektrischen Dose (1), wie Verteilerdose oder Geräteeinbaudose, mit einer dessen elektrische Bauelemente (6, 7, 8) aufnehmenden Platine (5) sowie einem diese tragenden Ring (9, 23), dadurch gekennzeichnet, daß der Ring (9, 23) in radialer Richtung nachgiebig ist und die Platine (5) aufnimmt sowie im Bereich seines Stirnrandes in radialer Richtung nach außen vorgespannte Federelemente aufweist.

2. Vorrichtung nach Anspruch 1, dadurch gekennzeichnet, daß der Ring (9) offen ist und daß die Schenkel (10) des Rings (9) als Federelemente dienen.

3. Vorrichtung nach Anspruch 2, dadurch gekennzeichnet, daß im Mittelbereich des Rings (9) eine Rinne (11) zur Ausrichtung an einem Auge (4) der Dose (1) vorgesehen ist.

4. Vorrichtung nach einem der Ansprüche 1 bis 3, dadurch gekennzeichnet, daß die Schenkel (10) des Rings (9) bandförmig ausgebildet sind.

5. Vorrichtung nach Anspruch 1, dadurch gekennzeichnet, daß die Vorrichtung (22) einen stirnseitigen Ring (23) mit sehnenförmigen Abschnitten (24) und mit an der Außenfläche angeordneten Federzungen (25, 26) aufweist.

6. Vorrichtung nach Anspruch 5, dadurch gekennzeichnet, daß die Federzungen (25, 26) in axialer Richtung gegen den Stirnrand hin ausgerichtet sind.

7. Vorrichtung nach einem der Ansprüche 1 bis 6, dadurch gekennzeichnet, daß die Federelemente in die Vorrichtung integriert oder mit derselben einstückig ausgebildet sind.

## Claims

1. A device (2, 22) for securing an overvoltage protector in an electrical box (1), such as a splitting box or a switch box, having a board (5) which receives the electrical components (6, 7, 8) of said overvoltage protector and a ring (9, 23) which retains said components, characterized in that the ring (9, 23) is flexible in the radial direction and receives the board (5) and has spring elements in the region of its front edge which are pretensioned outwards in the radial direction.

2. A device according to Claim 1, characterized in that the ring (9) is open and in that the limbs (10) of the ring (9) serve as spring elements.

3. A device according to Claim 2, characterized in that a groove (11) is provided in the centre region of the ring (9) for alignment with an eye (4) of the box (1).

4. A device according to one of Claims 1 to 3, characterized in that the limbs (10) of the ring (9) are of a strip-shaped construction.

5. A device according to Claim 1, characterized in that the device (22) has a frontal ring (23) having chordal portions (24) and having resilient tongues (25, 26) arranged at the outer surface.

6. A device according to Claim 5, characterized in that the resilient tongues (25, 26) are directed towards the front edge in the axial direction.

7. A device according to one of Claims 1 to 6, characterized in that the spring elements are integrated in the device or are constructed in one piece therewith.

## Revendications

1. Dispositif (2, 22) pour la fixation d'un appareil de protection contre les surtensions dans une prise électrique (1), par exemple une prise de distribution ou une prise de montage d'appareil, comportant une plaquette (5) reprenant ses composants électriques (6, 7, 8) ainsi qu'un anneau (9, 23) portant cette plaquette, caractérisé en ce que l'anneau (9, 23) est déformable dans la direction radiale, reprend la plaquette (5) et, dans la région de son bord frontal, présente des éléments à ressort précontraints vers l'extérieur dans la direction radiale.

2. Dispositif selon la revendication 1, caractérisé en ce que l'anneau (9) est ouvert et en ce que les branches (10) de l'anneau (9) servent d'éléments de ressort.

3. Dispositif selon la revendication 2, caractérisé en ce que dans la zone centrale de l'anneau (9) est prévue une rainure (11) permettant l'alignement sur un oeillet (4) de la prise (1).

4. Dispositif selon l'une des revendications 1 à 3, caractérisé en ce que les branches (10) de l'anneau (9) sont configurées en forme de bandes.

5. Dispositif selon la revendication 1, caractérisé en ce que le dispositif (22) présente un anneau frontal (23) doté de parties (24) en forme de cordes et de languettes de ressort (25, 26) disposées sur la surface extérieure.

6. Dispositif selon la revendication 5, caractérisé en ce que, dans le sens axial, les languettes de ressort (25, 26) sont dirigées vers la paroi frontale.

7. Dispositif selon l'une des revendications 1 à 6, caractérisé en ce que les éléments de ressort sont intégrés au dispositif ou sont réalisés d'un seul tenant avec ce dernier.
